# EUROPEAN PATENT APPLICATION

(11) **EP 2 254 291 A1**
(43) Date of publication of application: **24.11.2010**
(21) Application number: 10002963.6
(22) Date of filing: 19.03.2010
(51) Int. Cl.: H04L 12/58

(54) **Information exchange/share system, method and program thereof**

(30) Priority: 21.05.2009 JP 2009123597
(71) Applicant: Hitachi, Ltd., Chiyoda-ku Tokyo 100-8280 (JP)
(72) Inventor: Shibata, Tomohisa, Chiyoda-ku Tokyo 100-8220 (JP); Kiuchi, Hidenori, Chiyoda-ku Tokyo 100-8220 (JP); Ozeki, Satoru, Chiyoda-ku Tokyo 100-8220 (JP); Kamada, Yoshiharu, Chiyoda-ku Tokyo 100-8220 (JP)
(74) Representative: Strehl Schübel-Hopf & Partner

(57) **Abstract**

It is checked whether or not information requested in an information request is present in a message sharing/storing unit which stores information provided from an information provider and accessibility information setting an information requester which is allowed to access the information. It is also determined whether or not the information requester can access information requested in an information request message based on the accessibility information. When it is determined that the information requested in the information request message is already registered in the message sharing/storing unit and the information requester can access the information, information on a request-reply-message to the information requester is created based on the information in the message sharing/storing unit.

## Description

### CROSS REFERENCE TO RELATED APPLICATION

The present application claims benefit of the filing dates of Japanese Patent Application No. 2009-123597 filed on May 21, 2009 which is incorporated herein by reference.

### BACKGROUND OF THE INVENTION

### Field of the Invention

The present invention relates to an information exchange/share system, a method and a program thereof which make distribution of information more efficient in a system for exchanging information between plural users like companies.

### Description of the Related Art

Conventionally, in exchanging of information like environmental information between companies, it is typical to reply on a case-by-case basis when information requesting company needs provision of information. In an inter-company information exchange/share system which realizes such information exchange, the information requesting company which desires to acquire information serves as an origination for collecting information, but from the standpoint of an information providing company which provides information, the same information is provided to a plurality of information requesting companies, resulting in increasing of the transaction.
In such a circumstance, "GP/AS interface specifications" (version 1.42, February 20, 2009, Japan Environmental Management Association for Industry, Joint Article Management Promotion-consortium (JAMP, Information Distribution Infrastructure Project Planning Committee)) focuses on sharing of information, urges information providing companies to provide information autonomously. Accordingly, information requesting companies can freely acquire provided information as far as the information providing companies keep providing the information.

However, when an information requesting company attempts to collect information, processes are separated individually, such as a process of searching a DB (Database) in order to check presence/absence of information provision from an information providing company, a process of requesting acquisition of information if provided, a process of actually acquiring information, a process of requesting an information providing company to provide information if not provided yet, a process that an information providing company checks presence/absence of an information request, a process of providing information, a process that an information requesting company requests acquisition of information, and a process of actually acquiring information, so that the transaction between networks increases.

Information sharing can be accomplished by autonomous information provision from information providing companies, but the process at the information requesting company side and the process at the information providing company side become complex, so that it is not always true that the foregoing scheme is efficient. Accordingly, there is a demand for a method of reducing a network load and of facilitating information distribution between an information requesting company and an information providing company.

### SUMMARY OF THE INVENTION

In exchanging of information like environmental information between companies, as explained above, the same information is provided to plural information requesting companies, so that the transaction increases, and thus the network load increases from the standpoint of information providing companies which provide the information.
Conversely, the foregoing "GP/AS interface specifications" focuses on sharing of information, urges information providing companies to autonomously provide information, so that information requesting companies can freely acquire information as far as the information providing companies keep providing the information.
When information requesting companies attempt to collect information, it requires a process that the information requesting companies check presence/absence of registered information in a DB where information is registered, and a process of acquiring the information if registered therein. Moreover, it also requires a process of requesting information providing companies to provide information if not registered in the DB yet, a process that the information providing companies periodically check registration of information, and a process of acquiring information upon confirmation of registration of the information.

There are two cases when information providing companies provide information: one in which the information providing companies autonomously provide information in a DB; and the other in which the information providing companies provide information upon request of information provision. When the information providing companies autonomously provide information, it requires a process of providing the information, and a process of checking whether or not the provided information is correctly registered in the DB. Moreover, when the information providing companies provide information upon request, it requires a process of periodically checking presence/absence of information request, a process of confirming the content of the information request, a process of providing information, and a process of checking whether or not the provided information is correctly registered in the DB.

As explained above, it is necessary to execute plural processes when information is collected and also when information is provided, and exclusive commands for executing individual processes are prepared, but it is not possible to combine those commands to execute plural processes. Accordingly, the scheme does not make the number of process steps for a user more efficient, a system development and a maintenance thereof for information exchange are requisite process by process, and accesses to a Web server and a DB frequently occur, resulting in increasing of the network load.
The present invention has been made in view of the foregoing circumstances, and it is an object of the present invention to provide an information exchange/share system, a method and a program thereof which can make operations more efficient and can reduce a network load when an information provider and an information requester collect or provide information.

In order to achieve the above object, a first aspect in accordance with the present invention provides an information exchange/share system which exchanges, via communication means, information between a terminal of an information provider which provides the information to be distributed and a terminal of an information requester which requests an access to the distributed information, the system including: a message sharing/storing unit which stores the information provided from the terminal of the information provider, and accessibility information for setting an information requester which is allowed to access the information; an access control function which checks whether or not information requested in an information request message from the terminal of the information requester is present in the message sharing/storing unit, and also determines, based on the accessibility information, whether or not an information requester which requests the information requested in the information request message is allowed to access the information; and an automatic reply function which creates request-reply-message information to the information requester based on the information in the message sharing/storing unit without transmitting the information request message to the terminal of the information provider when it is determined that the information requested in the information request message from the information requester is already stored in the message sharing/storing unit and that the information requester is allowed to access the information.

Also, a second aspect in accordance with the present invention provides an information exchange/share system which exchanges, via a communication means, information between a terminal of an information provider which provides the information to be distributed and a terminal of an information requester which requests an access to the distributed information, the system including: a message sharing/storing unit which stores the information provided from the terminal of the information provider, and accessibility information for setting an information requester which is allowed to access the information; an access control function which determines whether or not information requested in an information request message is present in the message sharing/storing unit, and determines, based on the accessibility information, whether or not an information requester which requests the information requested in the information request message from the information requester is allowed to access the information; and a provision requesting function which creates information-provision request information to the information provider when it is determined that the information requested in the information request message from the terminal of the information requester is already stored in the message sharing/storing unit and that the information requester is not allowed to access the information based on the accessibility information or the information requested in the information request message is not stored in the message sharing/storing unit.

Also, a third aspect in accordance with the present invention provides a method for an information exchange/share system which exchanges, via a communication means, information between a terminal of an information provider which provides the information to be distributed and a terminal of an information requester which requests an access to the distributed information, and which includes a message sharing/storing unit which stores the information provided from the terminal of the information provider, and accessibility information for setting an information requester which is allowed to access the information, the method including: an access control step of checking whether or not information requested in an information request message from the terminal of the information requester is present in the message sharing/storing unit, and of determining, based on the accessibility information, whether or not an information requester which requests the information requested in the information request message is allowed to access to the information; and an automatic reply step of creating request-reply-message information to the information requester based on the information in the message sharing/storing unit without transmitting the information request message to the terminal of the information provider when it is determined that the information requested in the information request message from the information requester is already stored in the message sharing/storing unit and that the information requester is allowed to access the information.

Also, a fourth aspect in accordance with the present invention provides a method for an information exchange/share system which exchanges, via a communication means, information between a terminal of an information provider which provides the information to be distributed and a terminal of an information requester which requests an access to the distributed information, and which includes a message sharing/storing unit which stores the information provided from the terminal of the information provider, and accessibility information for setting an information requester which is allowed to access the information, the method including: an access control step of determining whether or not information requested in an information request message is present in the message sharing/storing unit, and of determining, based on the accessibility information, whether or not an information requester which requests the information requested in the information request message from the information requester is allowed to access the information; and a provision requesting step of creating information-provision request information to the information provider when it is determined that the information requested in the information request message from the terminal of the information requester is already stored in the message sharing/storing unit and that the information requester is not allowed to access the information based on the accessibility information or the information requested in the information request message is not stored in the message sharing/storing unit.

Also, a fifth aspect in accordance with the present invention provides a program for an information exchange/share system, and the program allows a computer to realize the method for the information exchange/share system according to the third or fourth aspect of the present invention.

### BRIEF DESCRIPTION OF THE DRAWINGS

FIG. 1 is a configuration diagram showing an inter-company information exchange/share system according to an embodiment of the present invention;
FIG. 2A is a diagram showing a table for user authentication information in authentication information possessed by a G/W server and a Web server;
FIG. 2B is a diagram showing a table for trade relation information in the authentication information possessed by the G/W server and the Web server;
FIG. 3A is a diagram showing data on management ID information stored in a message share DB of the embodiment;
FIG. 3B is a diagram showing data on provided-message information stored in the message share DB of the embodiment;
FIG 3C is a diagram showing data on access control information stored in the message share DB of the embodiment;
FIG. 3D is a diagram showing data on access history information stored in the message share DB of the embodiment;
FIG. 4 is a diagram showing data stored in the message share DB of the embodiment;
FIGS. 5A-5C are diagrams showing three patterns how a message flows between a provider user-terminal and a requester user-terminal in the inter-company information exchange/share system of the embodiment, where FIG. 5A is a diagram showing a flow in a first case, FIG. 5B is a diagram showing a flow in a second case, and FIG. 5C is a diagram showing a flow in a third case;
FIG. 6 is a flowchart showing how to acquire a request reply from an information providing company to an information requesting company in the inter-company information exchange/share system of the embodiment;
FIG. 7 is a diagram showing an example of a provider menu screen according to the embodiment;
FIG. 8 is a diagram showing an example of a provided file registration screen according to the embodiment;
FIG. 9 is a flowchart showing how to transmit an information request message from a requester user-terminal of the information requesting company and how to search the message share DB in the inter-company information exchange/share system according to the embodiment;
FIG. 10 is a flowchart showing how the G/W server in the inter-company information exchange/share system of the embodiment performs automatic reply or how to transmit an information request to a provider user-terminal;
FIG 11 is a flowchart showing how to acquire a request reply from the provider user-terminal of the information providing company to the requester user-terminal of the information requesting company in the inter-company information exchange/share system of the embodiment;
FIG. 12 is a flowchart showing a registration operation of a request reply from the provider user-terminal of the information providing company in the inter-company information exchange/share system of the embodiment;
FIG. 13 is a diagram showing an example of an information-request-message list screen according to the embodiment;
FIG. 14 is a diagram showing an example of a reply list creating screen according to the embodiment;
FIG. 15 is a diagram showing an example of a reply list creating screen according to the embodiment; and
FIG. 16 is a flowchart showing a registration operation of a request reply from the provider user-terminal of the information providing company in the inter-company information exchange/share system of the embodiment and a simultaneous registration operation to the message share DB.

### DETAILED DESCRIPTION OF THE PREFERRED EMBODIMENT

An explanation will be given of an embodiment of the present invention with reference to the accompanying drawings.

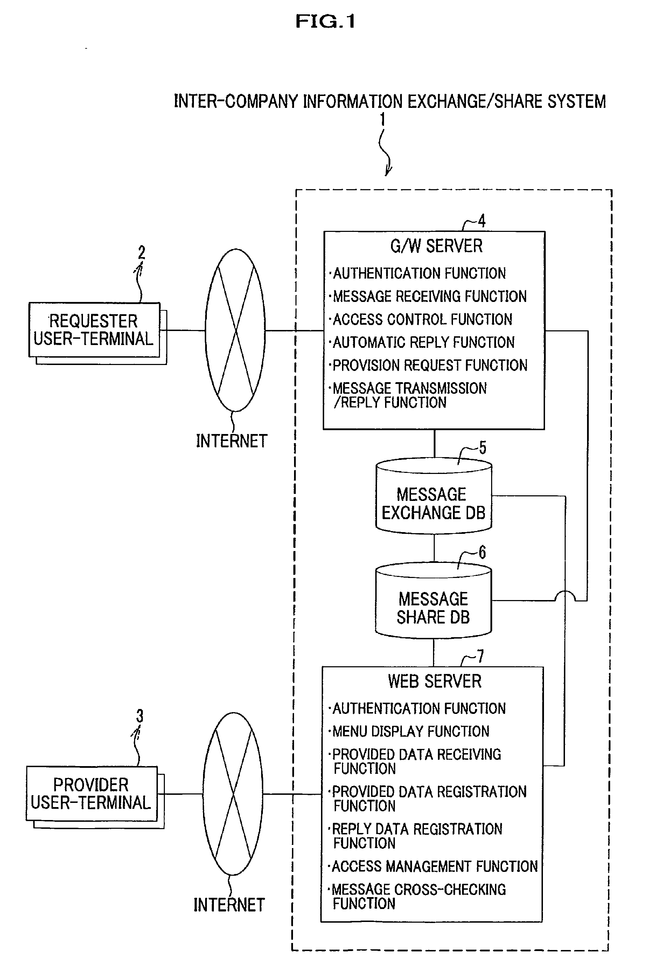

FIG. 1 is a configuration diagram showing an inter-company information exchange/share system 1 of the embodiment.

### «Brief Overview of Inter-company Information Exchange/Share System 1»

The inter-company information exchange/share system 1 of the embodiment shown in FIG. 1 stores, in a message share DB 6, information which is to be provided from a provider user-terminal 3 of an information providing company to an information requesting company. The system 1 also stores a provision history of message information in a message exchange DB 5 in accordance with the publication level of information when there is an information request from a requester user-terminal 2 of the information requesting company to the information providing company (G/W server 3), and replies to the request without causing the information providing company to do a reply operation through the provider user-terminal 3.

Conversely, when there is an information request but automatic reply cannot be performed such that there is no information to be provided in the message share DB 6, the content of the information request is stored in the message exchange DB 5, and the information providing company is caused to reply through the provider user-terminal 3. The content of the reply through the provider user-terminal 3 may be stored in the message share DB 6.
The information providing company can successively update, through the provider user-terminal 3, information which is stored in the message share DB 6 and which is to be provided to the information requesting company, and can newly store another piece of information therein.

The inter-company information exchange/share system 1 will be explained in detail.

### <Configuration of Inter-company Information Exchange/Share System 1>

The inter-company information exchange/share system 1 shown in FIG. 1 includes the requester user-terminal 2 of the information requesting company which is an information acquisition side, the provider user-terminal 3 of the information providing company which provides information, the G/W (Gate Way) server 4 to which the requester user-terminal 2 accesses via the Internet (communication means), and which executes a process of use authentication of the system 1, receives a message, and processes a request, the message exchange DB (Database) 5 which stores an information request message, a request replying message, and a reply file when information is exchanged, the message share DB 6 which stores provided-message information 11 including a provided file (attached file 11e) for causing the information providing company to autonomously provide information before an information request arrives from the information requesting company, and to share information therewith, and a Web server 7 to which the provider user-terminal 3 accesses via the Internet (communication means), and executes a process of use authentication and processes a request.

### <G/W server 4>

The G/W server 4 mainly exchanges files, and includes a Central Processing Unit (CPU), a main memory device like a flash memory, and an auxiliary memory device like an HDD (Hard Disk Drive). The auxiliary memory device stores a system program which realizes an authentication function, a message receiving function, an access control function, an automatic replying function, a provision requesting function, a message transmitting/replying function, and the like, is written in, for example, C language, and is stored in the form of a machine language.
When the inter-company information exchange/share system 1 operates, as the CPU of the G/W server 4 loads the system program in the main memory device and runs such program, the authentication function, the message receiving function, the access control function, the automatic replying function, the provision requesting function, the message transmitting/replying function and the like are realized.

### <Web Server 7>

The Web server 7 exchanges information through a Web browser, and includes a CPU, a main memory device like a flash memory and an auxiliary memory device like an HDD. The auxiliary memory device stores a system program in the form of a mechanical language which realizes an authentication function, a menu display function, a provided data receiving function, a provided data registration function, a reply data registration function, an access management function, a message cross-checking function, and the like.
When the inter-company information exchange/share system 1 operates, the CPU loads the system program in the main memory device and runs the program, thereby realizing the authentication function, the menu display function, the provided data receiving function, the provided data registration function, the reply data registration function, the access management function, the message cross-checking function, and the like.

### <User Authentication Information 8 and Trade Relation Information 9>

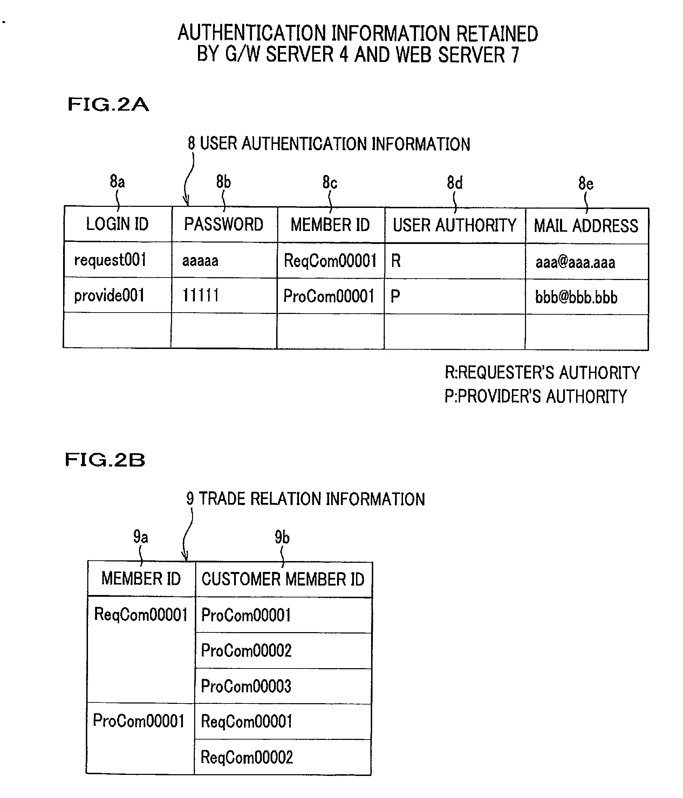

FIG. 2A shows a table of user authentication information 8 possessed by the G/W server 4 and the Web server 7, and FIG. 2B shows a table of trade relation information 9 in authentication information possessed by the G/W server 4 and the Web server 7.
The user authentication information 7 and the trade relation information 9 shown in FIGS. 2A and 2B, respectively, are tables held by the G/W server 4 and the Web server 7 to authenticate accesses from respective requester user-terminal 2 and provider user-terminal 3 to the inter-company information exchange/share system 1.
Accordingly, the G/W server 4 and the Web server 7 individually store the user authentication information 8 (see FIG. 2A) including authentication information for log-in to the inter-company information exchange/share system 1, and also store the trade relation information 9 (see FIG. 2B) indicating a trade relation between the information providing company and the information requesting company.

The user authentication information 8 includes pieces of data, such as a login ID 8a as identification information, a password 8b as a secret code, a membership ID 8c indicating each of the information requesting company and the information providing company, a user authority 8d indicating an authority of a user, and a mail address 8e of the member.
The user authority 8d is expressed as "R" indicating a requester's authority or as "P" indicating a provider's authority.
The trade relation information 9 includes pieces of data, such as a membership ID 9a for identifying a member, and a customer member ID 9b for identifying a member having a trade relation with the member having the membership ID 9a.

### <Message Share DB 6>

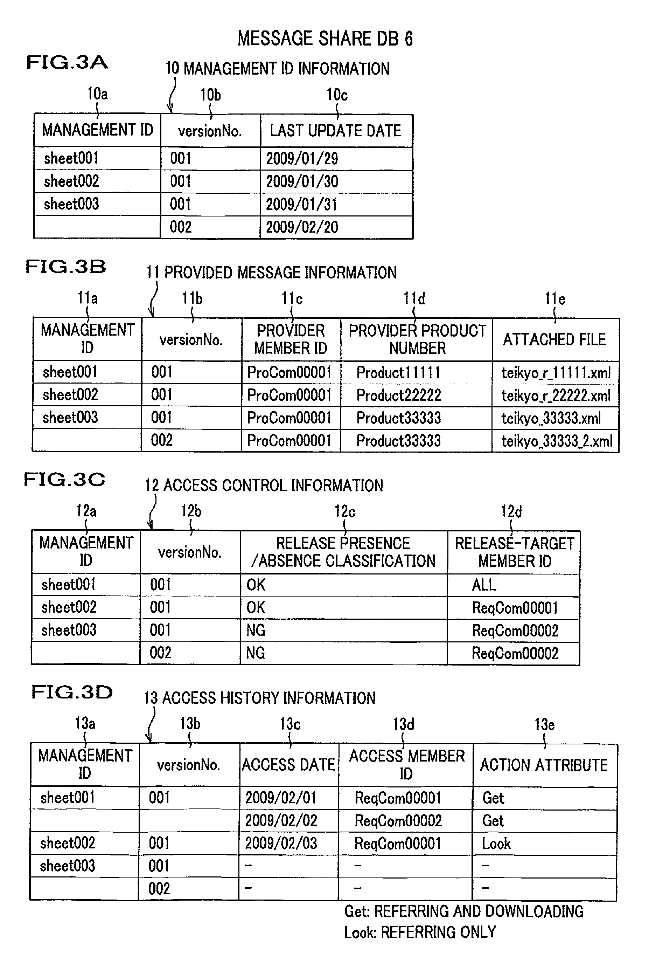

FIGS. 3A-3D show pieces of information stored in the message share DB 6 (see FIG. 1), i.e., pieces of data stored in the message share DB 6. FIG. 3A shows data on management ID information 10 stored in the message share DB 6. FIG. 3B shows data on provided-message information 11 stored in the message share DB 6. FIG. 3C shows data on access control information 12 stored in the message share DB 6. FIG. 3D shows data on access history information 13 stored in the message share DB 6.
The message share DB 6 shown in FIGS. 1 and 3 is for sharing information between the requester user-terminal 2 and the provider user-terminal 3, and stores information to be provided, an access level to the information, and an access history.

As shown in FIG. 3, the message share DB 6 stores the management ID information 10 including a management ID 10a for indentifying information to be provided, the provided-message information 11 including information on the information to be provided, the access control information 12 indicating a publication level of the information to be provided, and the access history information 13 including an access history to the information to be provided.
The management ID information 10 shown in FIG. 3A includes the management ID 10a allocated to the information to be provided when such information is stored in the message share DB 6 and for identifying such information, a version No. 10b indicating a version of the information to be provided when such information is updated and stored in the message share DB 6, and a last update date 10c indicating an update date when the information to be provided is stored in the message share DB 6.

Note that the management ID 10a is newly allocated to the information to be provided when such information is stored in the message share DB 6 at a first time, and examples of such timing is when the material of a product is changed and when the level of information release is changed.
The provided-message information 11 shown in FIG. 3B includes a management ID 11a for identifying information to be provided, a version No. 11b indicating a version of the management ID 11 a, a provider member ID 11 c for identifying the information providing company, a provider product number 11 d for identifying a product managed by the information providing company, and an attached file 11e recording the entity of the information to be provided.

The access control information 12 shown in FIG. 3C includes a management ID 12a for identifying information to be provided, a version No. 12b indicating a version of the management ID 12a, a release presence/absence classification 12c indicating presence/absence of the release of the information to be provided, and a release-target member ID 12d for identifying a target for presence/absence of the release indicated by the release presence/absence classification 12c.
The access history information 13 shown in FIG 3D includes a management ID 13a for identifying information to be provided, a version No. 13b indicating a version of the management ID 13a, an access date 13c indicating a date when the information to be provided is accessed, an access member ID 13d for identifying a member accessed to the information, and an action attribute 13e indicating whether an access to the information is referring and downloading of the information (= Get) or merely referring (= Look).

### <Message Exchange DB 5>

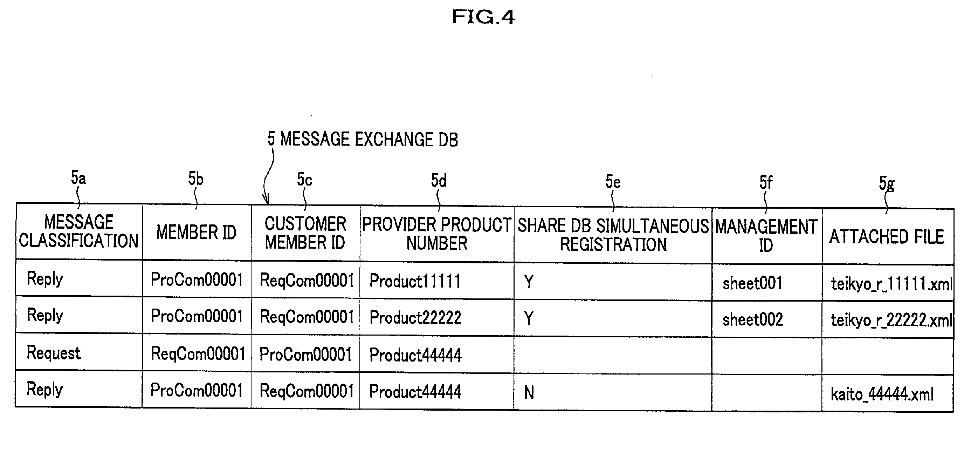

FIG. 4 shows information retained in the message exchange DB 5 (see FIG. 1), i.e., data stored in the message exchange DB 5.
The message exchange DB 5 shown in FIGS. 1 and 4 stores information on an exchanged message when information, such as information request, or a reply to information request is exchanged, and stores pieces of data on an information request message (= Request) and on a request reply message (= Reply).

As shown in FIG. 4, the message exchange DB 5 stores a message classification 5a indicating either a request (= Request) or a reply (= Reply), a member ID indicating an originator (= From) of the request or the reply, a customer member ID 5c indicating to whom (= To) the request or the reply is directed, a provider product number 5d indicating the number of a product related to provided information, a share DB simultaneous registration 5e indicating whether information is stored in the message exchange DB 5 and simultaneously stored in the message share DB 6 (= Y) or not (= N), a management ID 5f of the provided information, and an attached file 5g recording the content (entity) of the provided information.

### <Operation of Inter-company Information Exchange/Share System 1>

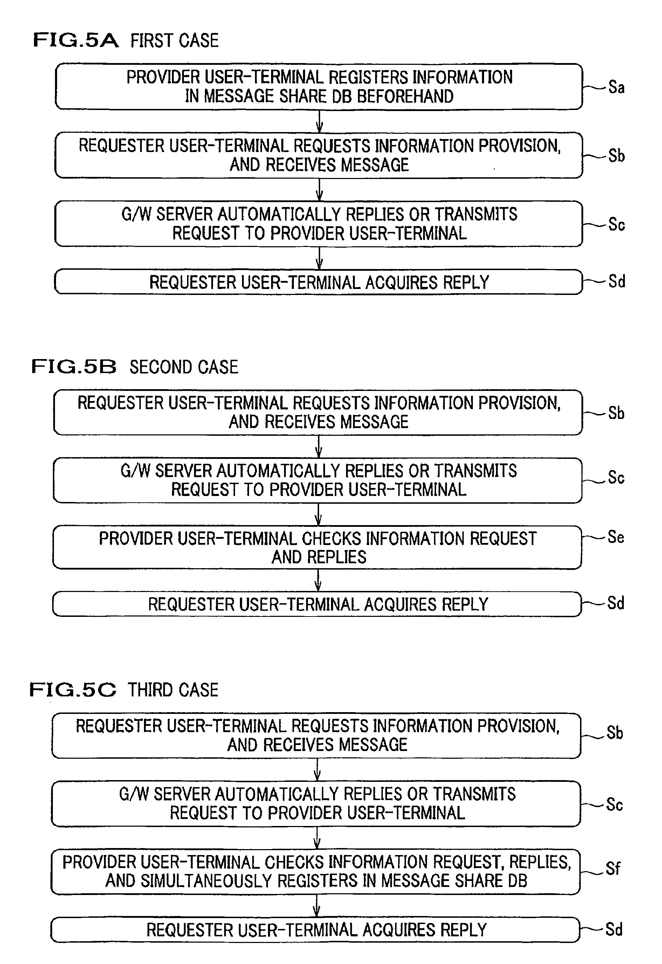

An explanation will be given of an operation of the inter-company information exchange/share system 1 in detail with three cases 1-3 being exemplified in FIGS. 5A-5C.
FIGS. 5A-5C are diagrams showing three patterns how a message flows between the information providing company and the information requesting company in the inter-company information exchange/share system 1. FIG. 5A is a flowchart for a first case which is a first pattern, FIG. 5B is a flowchart for a second case which is a second pattern, and FIG 5C is a flowchart for a third case which is a third pattern. Sa, Sb, Sc, Sd, Se, and Sf in FIGS. 5A-5C each indicates a common program module.

The first case is a case in which the information providing company stores information in the message share DB 6 beforehand using the provider user-terminal 3 (see FIG. 1), and the system 1 automatically replies to the requester user-terminal 2 of the information requesting company without causing the information providing company to do anything when there is a request for information provision from the requester user-terminal 2 of the information requesting company.

The second case is a case in which the information providing company replies to the information requesting company using the provider user-terminal 3 when there is a request for information provision from the requester user-terminal 2 of the information requesting company, including a case in which the information providing company does not register the information in the message share DB 6 beforehand using the provider user-terminal 3.

The third case is a case in which the information providing company replies to the requester user-terminal 2 of the information requesting company using the provider user-terminal 2 and the replied information is stored in the message share DB 6 in this system 1 when there is a request for information provision from the requester user-terminal 2 of the information requesting company, including a case in which the information providing company does not register the information in the message share DB 6 beforehand using the provider user-terminal 3.

Next, an operation of each of the first to third cases will be explained in more detail.

### <Operation in First Case>

In the first case shown in FIG 5A, when information provision is requested from the requester user-terminal 2, the G/W server 4 searches information registered through the provider user-terminal 3 (see FIG. 1) in the message share DB 6, the system 1 automatically replies instead of the provider user-terminal 3 when the searched information is present, and the requester user-terminal 2 acquires the information.
First, in a step Sa in FIG. 5A, the provider user-terminal 3 registers information in the message share DB 6 (see FIG. 3) beforehand through the provided data registration function of the Web server 7.

Next, in a step Sb in FIG. 5A, the requester user-terminal 2 request information provision, and the message receiving function of the G/W server 4 receives the message of the information request.
Subsequently, in a step Sc in FIG. 5A, when automatic reply by the system 1 is possible, the automatic reply function of the G/W server 4 automatically replies with data acquired from the message share DB 6, or when the automatic reply is not possible, the provision requesting function of the G/W server 4 transmits a request to the provider user-terminal 3 by means of an electronic mail.
Next, in a step Sd in FIG. 5A, the requester user-terminal 2 acquires a reply through the message transmission/reply function of the G/W server 4.

### <Operation in Second Case>

In the second case shown in FIG 5B, when the requester user-terminal 2 (see FIG. 1) requests information provision, the G/W server 4 searches information in the message share DB 6 but no searched information is present, so that information request is further transmitted to the provider user-terminal 3, the provider user-terminal 3 checks the information request, and replies to the requester user-terminal 2 only.
First, in a step Sb in FIG. 5B, the requester user-terminal 2 requests information provision, and the message receiving function of the G/W server 4 receives the message of the information request.

Next, in a step Sc in FIG. 5B, when automatic reply by the system 1 is possible, the automatic reply function of the G/W server 4 automatically replies with data acquired from the message share DB 6, or when the automatic reply is not possible, the provision requesting function of the G/W server 4 further transmits the request to the provider user-terminal 3 by means of an electronic mail.
Subsequently, in a step Se in FIG. 5B, the provider user-terminal 3 checks the information request, and replies through the reply data registration function of the Web server 7.
Next, in a step Sd in FIG. 5B, the requester user-terminal 2 acquires the reply through the message transmission/reply function of the G/W server 4.

### <Operation in Third Case>

In the third case shown in FIG. 5C, when the requester user-terminal 2 (see FIG. 1) requests information provision, the G/W server 4 searches the information in the message share DB 6, but the searched information is not present, so that information request is further transmitted to the provider user-terminal 3, the provider user-terminal 3 checks the information request, and not only replies to the requester user-terminal 2 but also registers the information in the message share DB 6 at the same time.
First, in a step Sb in FIG. 5C, the requester user-terminal 2 requests information provision, and the message receiving function of the G/W server 4 (see FIG. 1) receives the message of the information request.

Next, in a step Sc in FIG. 5C, when automatic reply is possible by the system 1, the automatic reply function of the G/W server 4 automatically replies, or when the automatic reply is not possible, the provision requesting function of the G/W server 4 further transmits the request to the provider user-terminal 3 by means of an electronic mail.
Subsequently, in a step Sf in FIG. 5C, the provider user-terminal 3 checks the information request, replies through the reply data registration function of the Web server 7, while at the same time, registers the information in the message share DB 6 (see FIGS. 1 and 3) through the provided data registration function of the Web server 7.
Next, in a step Sd in FIG. 5C, the requester user-terminal 2 acquires the reply through the message transmission/reply function of the G/W server 4.

Next, a detailed explanation will be given of the program modules Sa, Sb, Sc, Sd, Se, and Sf shown in FIGS. 5A-5C. In the explanation, it is assumed that the requester user-terminal 2 shown in FIG. 1 uses a command interface and the provider user-terminal 3 uses a Web interface.

### <Program Module Sa>

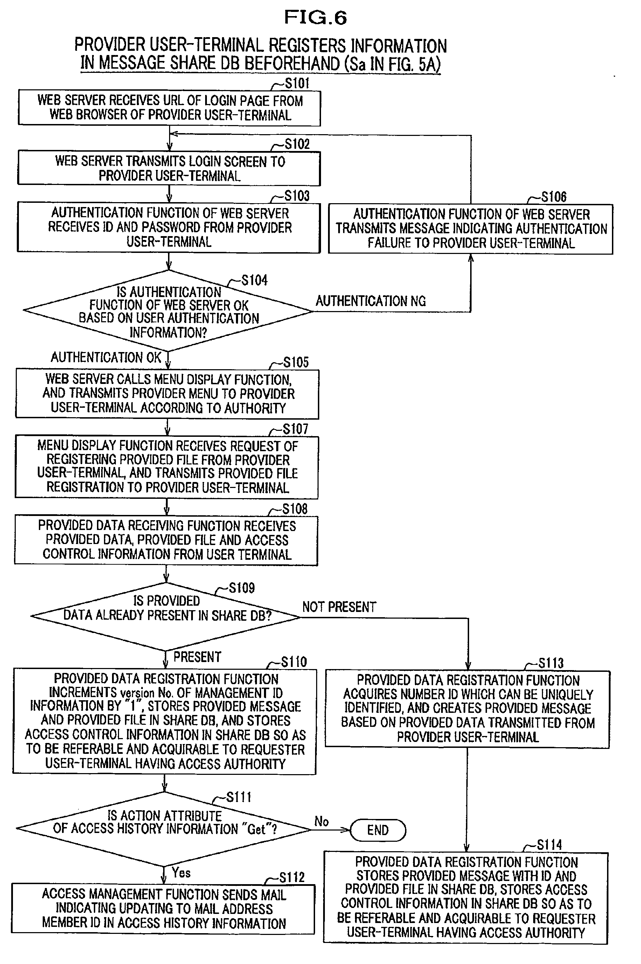

The program module Sa in FIG. 5A that "the provider user-terminal 3 (see FIG. 1) registers information in the message share DB 6 beforehand" will be explained with reference to FIGS. 6, 2, 3 and the like.
FIG. 6 is a flowchart showing how the information requesting company acquires a request reply from the information providing company in the inter-company information exchange/share system 1.

The flow of the program module Sa is as follows.
First, in a step S101 in FIG. 6, the information providing company selects a login screen from an initial screen of the inter-company information exchange/share system 1 using the provider user-terminal 3. This causes the Web server 7 shown in FIG. 1 to receive the URL of the login page transmitted from the Web browser of the provider user-terminal 3, and in a step S 102 in FIG. 6, the login screen is transmitted to the provider user-terminal 3.
Next, in a step S 103 in FIG. 6, the information providing company inputs its own login ID and a password through the login screen displayed on the provider user-terminal 3, and presses an enter key. This causes the authentication function of the Web server 7 to receive the login ID and the password both transmitted from the provider user-terminal 3, and in a step S 104 in FIG. 6, it is checked whether or not a combination of the login ID and the password is present in the user authentication information 8 (see FIG. 2A).

When the combination of the login ID and the password is not present in the user authentication information 8 (see FIG. 2A) (step S 104 in FIG. 6: AUTHENTICATION NG), in a step S 106 in FIG. 6, the authentication function of the Web server 7 transmits a message to the effect that authentication is failed to the provider user-terminal 3, and the process returns to the step S 102 in Fig. 6.
Conversely, when the combination of the input login ID, e.g., "provide001" and password, e.g., "11111" is present in, for example, the second row of the user authentication information 8 shown in FIG. 2A (step S 104 in FIG. 6: AUTHENTICATION OK), in a step S105 in FIG 6, the Web server 7 refers to the user authentication information 8 shown in FIG. 2A, confirms that the user authentication 8d corresponding to the received login ID and password is "P" (provider's authority), calls out the menu display function of the Web server 7 (see FIG. 1), and transmits a provider menu to the provider user-terminal 3.

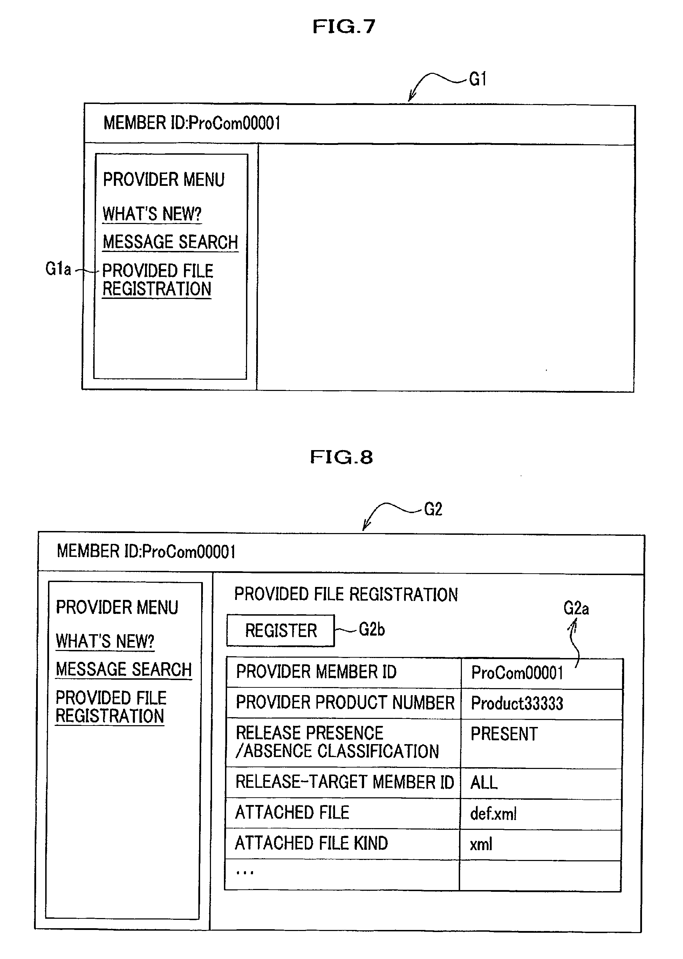

FIG. 7 shows an example of a provider menu screen G 1.
Next, in a step S 107 in FIG. 7, as the information providing company selects "provided file registration" G1a in the provider menu screen G 1 in FIG. 7, the menu display function receives the provided file registration request from the provider user-terminal 3, and transmits a provided file registration screen to the provider user-terminal 3.
FIG. 8 shows an example of a provided file registration screen G2.
Next, in a step S 108 in FIG. 6, the information providing company fills individual items G2a, such as a provider member ID, a provider product number, a release presence/absence classification, a release-target member ID, and an attached file, through the provided file registration screen G2 in FIG. 8, and presses a registration button G2b. This allows the provided data receiving function to receive the provider member ID transmitted from the provider user-terminal 3, an information provision message including the provider product number, an attached file which is a file to be provided, and access control information, such as the release presence/absence classification, and the release-target member ID.

Next, in a step S 109 in FIG. 6, the provided data registration function of the Web server 7 analyzes the information provision message, and searches a management ID uniquely identifying the provided-message information of the information provision message, the provided file (attached file), and the access control information from the provided-message information 11 and the access control information 12 including the corresponding provider member ID, provider product number, and provided file (attached file) in the message share DB 6 (see FIG. 3), thereby checking whether or not the foregoing management ID is present in the message share DB 6.
When it is determined that such management ID possessed by the information provision message is not present (step S109: NOT PRESENT), in a step S113 in FIG. 6, the provided data registration function of the Web server 7 (see FIG. 1) numbers a management ID which can be identified uniquely from the provider user-terminal 3, creates provided-message information 11, and allocates a number "001" to the version No. in the provided-message information 11 (step S113).

Thereafter, in a step S 114 in FIG. 6, the provided data registration function (see FIG. 1) stores the provided-message information 11 to which the management ID is allocated, the provided file (attached file 11e), and the access control information 12 in the message share DB 6 (see FIG. 3), and causes such pieces of information to be referable and acquirable to the requester user-terminal 2 (see FIG. 1) having an access authority (step S114).
Conversely, in the step S 109 in FIG. 6, when it is determined that the management ID possessed by the information provision message is present (step S109: PRESENT), in a step S 110 in FIG. 6, it is recognized as updating of the information provision message or the provided file, respective version No. in the management ID information 10, the provided-message information 11, and the access control information 12 are incremented by 1, the provided-message information 11 and the provided file (attached file 11e) in the information provision message and the access control information 12 are stored in the message share DB 6 (see FIG. 3), and are caused to be referable and acquirable to the requester user-terminal 2 (see FIG. 1) having an access authority.

In a step S111 in FIG. 6, the access management function of the Web server 7 (see FIG. 1) whether or not the action attribute 13e of the access history information 13 shown in FIG. 3D is "Get" indicating that the requester user-terminal 2 has acquired the provided-message information and the provided file.
When it is determined in the step S111 in FIG 6 that the attribute is "Get", in a step S 112 in FIG 6, the trade relation information 9 shown in FIG 2B is referred, and a mail to the effect that the information provision message or the provided file is updated is transmitted to the mail address 8e of the member ID 8c of the user authentication information 8 (see FIG 2A) linked with the accessed member ID.
Conversely, when it is determined in the step S 111 in FIG. 6 that the attribute is not "Get", the process is terminated.
This is how the information request company acquires a request reply from the information providing company in the inter-company information exchange/share system 1 (program module Sa) in FIG. 6.

### <Program Module Sb>

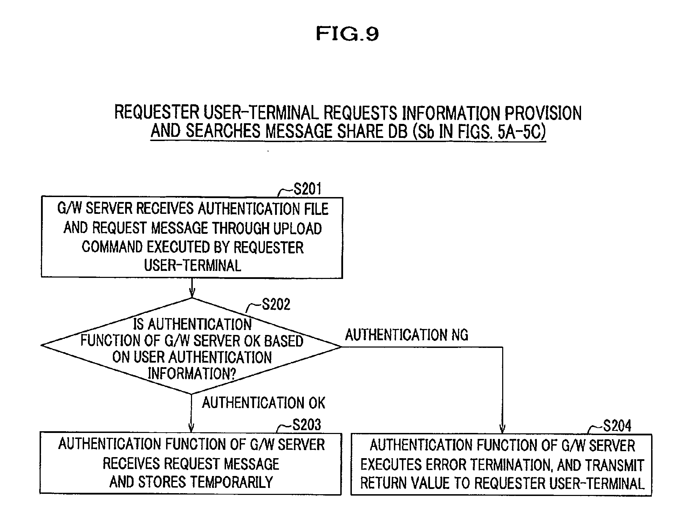

The program module Sb in FIGS. 5A-5C that "the requester user-terminal 2 (see FIG. 1) requests information provision and searches the message share DB 6 (see FIG. 3)" will be explained in more detail with reference to FIGS. 9, 2, and 3. FIG. 9 is a flowchart showing how the requester user-terminal 2 of the information requesting company transmits information request message and searches the message share DB 6 in the inter-company information exchange/share system 1.

In a step S201 in FIG. 9, the authentication function of the G/W server 4 (see FIG. 1) receives an authentication file and an information request message both transmitted through an upload command executed by the requester user-terminal 2, and in a step S202 in FIG. 9, checks whether or not a combination of a login ID and a password both included in the authentication file is present in the user authentication information 8 (see FIG. 2A).
When such a combination is present in the user authentication information 8 (step S202: AUTHENTICATION OK), in a step S203 in FIG. 9, the authentication function of the G/W server 4 confirms that the user authority 8d in the user authentication information 8 (see FIG 2A) is "R" (requester's authority), calls out the message receiving function of the G/W server 4 (see FICx 1), so that the message receiving function receives the message of an information provision request, and the message is temporarily stored in a work area.

Conversely, when it is determined in the step S202 in FIG. 9 that the combination of the login ID and the password both included in the authentication file is not present in the user authentication information 8 (see FIG. 2A), in a step S204 in FIG. 9, the authentication function of the G/W server 4 executes an error termination, transmits a return value of an error code to the requester user-terminal 2, and the requester user-terminal 2 displays a message or the like indicating that authentication is NG (No Good).
The foregoing operation shown in FIG. 9 is the process (program module Sb) of transmitting an information request message from the requester user-terminal 2 of the information requesting company in the inter-company information exchange/share system 1 and of searching in the message share DB 6.

### <Program Module Sc>

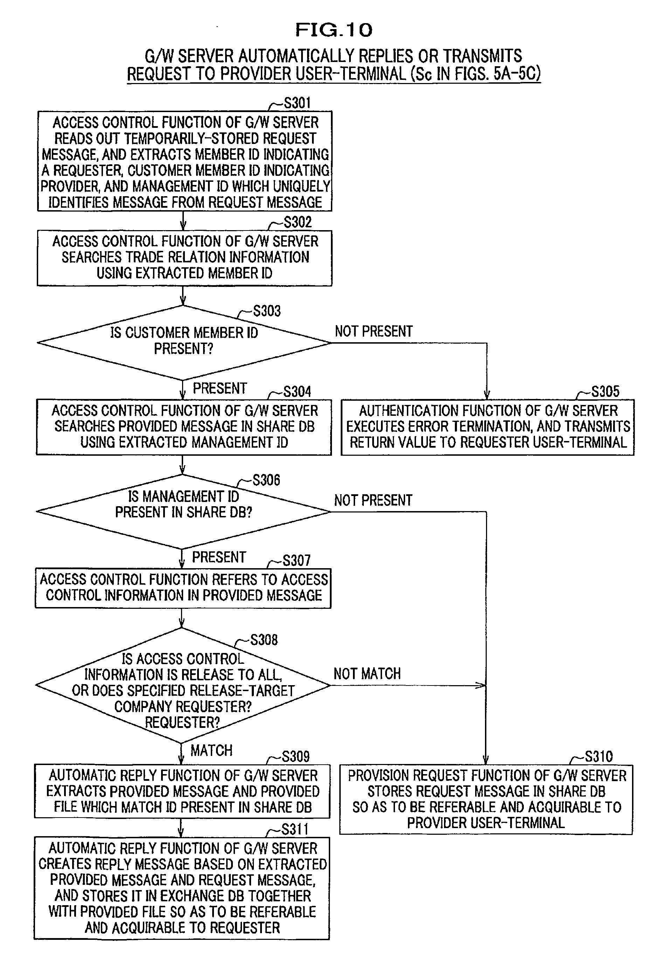

An explanation will be given of the program module Sc shown in FIG. 5 that "the G/W server (see FIG. 1) automatically replies or transmits a request to the provider user-terminal 3" with reference to FIGS. 10, 3, and 4.
FIG. 10 is a flowchart showing how the G/W server 4 in the inter-company information exchange/share system 1 automatically replies or transmits an information request to the provider user-terminal 3.
In a step S301 in FIG 10, the access control function of the G/W server 4 (see FIG. 1) extracts, from the information request message temporarily stored in the step S203 in FIG. 9, a member ID indicating an information requesting company, a customer member ID indicating an information providing company, and a management ID of information.

Next, in a step S302 in FIG. 10, the access control function searches the trade relation information 9 (see FIG 2B) with the extracted member ID being as a search key, and in a step S303 in FIG 10, checks whether or not a combination of the member ID and the customer member ID is present in the trade relation information 9.
When such a combination is present in the trade relation information 9 (step S303: ID PRESENT), in a step S304 in FIG. 10, a management ID in the provided-message information 11 stored in the message share DB 6 is subjected to searching with the extracted management ID being as a search key, and in a step S306 in FIG. 10, it is checked whether or not an information provision message matching the management ID is present in the message share DB 6.

For example, when a management ID, e.g., "sheet001" is present in the first row of the provided-message information 11 (see FIG. 3B), or a management ID, e.g., "sheet 0002" is present in the second row of the provided-message information 11 (see FIG. 3B) (step S306: PRESENT), in a step S307 in FIG. 10, the access control function of the G/W server 4 refers to the access control information 12 shown in FIG. 3C in the message share DB 6 based on the management ID, and in a step S308 in FIG. 10, checks whether or not the release presence/absence classification 12c is "OK" and the release-target member ID is "ALL", or whether or not the member ID indicating the requester user-terminal 2 matches the release-target member ID 12d.

For example, for the member ID "sheet001 ", when the release presence/absence classification 12c is "OK", and the release-target member ID 12d is "ALL", and, for the management ID "sheet 002", when the release presence/absence classification 12c is "OK", and the release-target member ID 12d is "ReqCom00001" (step S308: RELEASE TO ALL OK OR SPECIFIED RELEASE-TARGET COMPANY MATCHES REQUESTER USER-TERMINAL 2), in a step S309 in FIG. 10, the automatic reply function of the G/W server 4 (see FIG 1) extracts, from the message share DB 6 (see FIG. 3), the provided-message information 11 and the provided file (attached file 11e) having the management ID matching the management ID extracted from the information request message.

Subsequently, in a step S311 in FIG. 10, the automatic reply function of the G/W server 4 merges the information request message and the extracted provided-message information 11 together, sets an ID "ProCom00001 " for identifying the provider user-terminal 3 as the member ID included in the request-reply-message (see FIG. 4), sets an ID "ReqCom00001 " for identifying the requester user-terminal 2 as the customer member ID 5c (see FIG. 4), and registers the request-reply-message and the provided file in the message exchange DB 5 (see FIG. 4) with the message classification 5a (see FIG. 4) being set as "Reply" indicating a reply to the information request, and the request-reply-message and the provided file are set to be referable and acquirable to the requester user-terminal 2. At this time, the automatic reply function of the G/W server 4 sets the action attribute 13e of the access history information shown in FIG. 3D to be "Get" regarding the management ID "sheet001" and the management ID "sheet002".

Conversely, in a step S306 in FIG. 10, when the management ID is NULL, there is no "management ID which is NULL" in the provided-message information 11 in the message share DB 6, so that a determination result becomes "no ID is present", and in a step S310 in FIG. 10, the provision requesting function of the G/W server 4 (see FIG. 1) registers the information request message in the message exchange DB 5 (see FIG. 4) with the message classification 5a being set as "Request" indicating an information provision request, and the information request message is set to be referable and acquirable to the provider user-terminal 3.

For example, when a management ID is "sheet003", "sheet003" is present in the third row of the provided-message information 11 (see FIG 3B) in the message share DB 6. In this case, because a determination result at the step S306 in FIG. 10 is "management ID is present", in a step S307 in FIG. 10, the access control function of the G/W server 4 refers to the access control information 12 (see FIG. 3C) in the message share DB 6, and in a step S308 in FIG. 10, checks that the release presence/absence classification 12c is "OK", and the release-target member ID 12d is "ALL" or the member ID identifying the requester user-terminal 2 is the release-target member ID 12d.

When the release presence/absence classification 12c is "NG" for the management ID "sheet003", in the step S308 in FIG. 10, if it is determined that release presence/absence classification is "un-releasable" or the release-target member ID 12d of the specified release-target company does not match the member ID of the requester user-terminal, in a step S310 in FIG. 10, the provision request function of the G/W server 4 registers the information request message in the message exchange DB 5 (see FIG. 4) with the message classification 5a being set as "Request", and the information request message is set to be referable and acquirable to the provider user-terminal 3.
The foregoing operation shown in FIG. 10 is the process (program module Sc) that the G/W server 4 automatically replies or transmits a request to the provider user-terminal 3.

### <Program Module Sd>

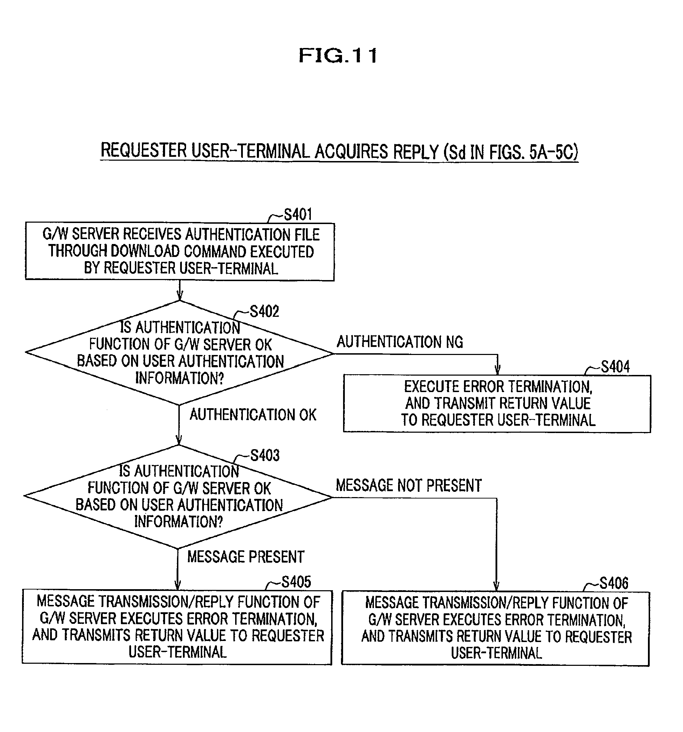

An explanation will be given of the program module Sd shown in FIG. 5 that "the requester user-terminal 2 acquires a reply" with reference to FIGS. 11, 2, and 4.

FIG 11 is a flowchart showing how the requester user-terminal 2 of the information requesting company acquires a request reply from the provider user-terminal 3 of the information providing company in the inter-company information exchange/share system 1 (according to the program module Sd).
In a step S401 in FIG. 11, the authentication function of the G/W server 4 (see FIG 1) receives an authentication file transmitted through a download command executed by the requester user-terminal 2. In a step S402 in FIG 11, it is checked whether or not a combination of a login ID and a password both included in the authentication file is present in the user authentication information 8 (see FIG. 2A).

When the combination of the login ID and the password both included in the transmitted authentication file is not present in the user authentication information 8 (step S402: AUTHENTICATION NG), in a step S404, the authentication function of the G/W server 4 executes an error termination, transmits a return value of an error code to the requester user-terminal 2. The requester user-terminal 2 displays a message corresponding to the return value, e.g., "login ID and password incorrect".
Conversely, when the combination of the login ID and the password both included in the transmitted authentication file is present in the user authentication information 8 (step S402: AUTHENTICATION OK), in a step S403 in FIG. 11, the authentication function of the G/W server 4 confirms that the user authority 8d in the user authentication information 8 (see FIG. 2A) is "R" (requester's authority), calls out the message transmission/reply function of the G/W server 4. The message transmission/reply function searches data on the exchanged message in the message exchange DB 5 (see FIG. 4), and checks whether or not a message having the message classification "Reply" is present.

When such message is present in the exchanged message information (step S403: MESSAGE PRESENT), in a step S405 in FIG 11, the message transmission/reply function of the G/W server 4 (see FIG. 1) creates a request-reply-message using the member ID 5b, the customer member ID 5c, the provider product number 5d, and the management ID 5f registered in the message exchange DB 5 (see FIG. 4), while at the same time, extracts the attached file 5g of the reply file, and transmits the attached file 5g to the requester user-terminal 2 of the information requesting company (step S405).

Conversely, when such message is not present in the exchanged message information (step S403: NO MESSAGE PRESENT), the message transmission/reply function of the G/W server 4 (see FIG. 1) executes an error termination, and transmits the return value of an error code to the requester user-terminal 2. The requester user-terminal 2 displays a message corresponding to the return value, e.g., "no exchanged message information present".
The foregoing operation shown in FIG. 11 is the process (program module Sd) that the requester user-terminal 2 of the information requesting company acquires a request reply from the provider user-terminal 3 of the information providing company.

### <Program Module Se>

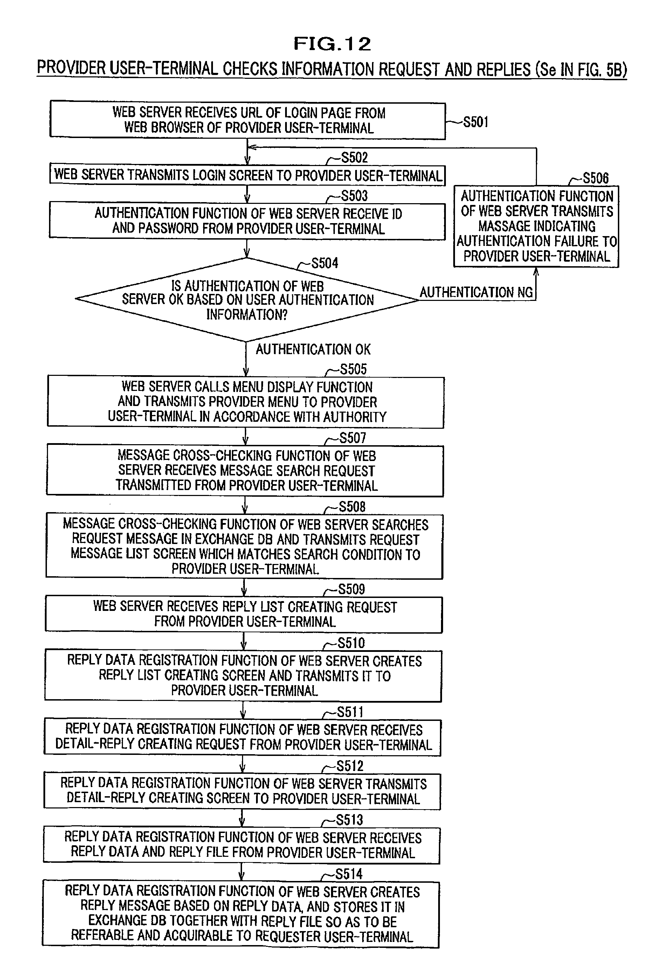

Next, an explanation will be given of the program module Se shown in FIG. 5B that "the provider user-terminal 3 confirms an information request, and replies" with reference to FIGS. 12, 2, 4, 7, and the like.
FIG. 12 is a flowchart showing how the inter-company information exchange/share system 1 registers a request reply from the provider user-terminal 3 of the information providing company.
In a step S501 in FIG. 12, the Web server 7 (see FIG. 1) receives the URL of the login page transmitted from the Web browser of the provider user-terminal 2, and in a step S502 in FIG. 12, transmits the login screen to the provider user-terminal 3.

Next, in a step S503 in FIG. 12, the authentication function of the Web server 7 receives a login ID and a password both transmitted from the provider user-terminal 3, and in a step S504 in FIG. 12, checks whether or not a combination of the login ID and the password is present in the user authentication information 8 (see FIG .2A).
When such a combination is not present in the user authentication information 8 (step S504: AUTHENTICATION NG), in a step S506 in FIG. 12, the authentication function of the Web server 7 transmits a message to the effect that authentication is failed to the provider user-terminal 3, and the process returns to the step S502 in FIG. 12.

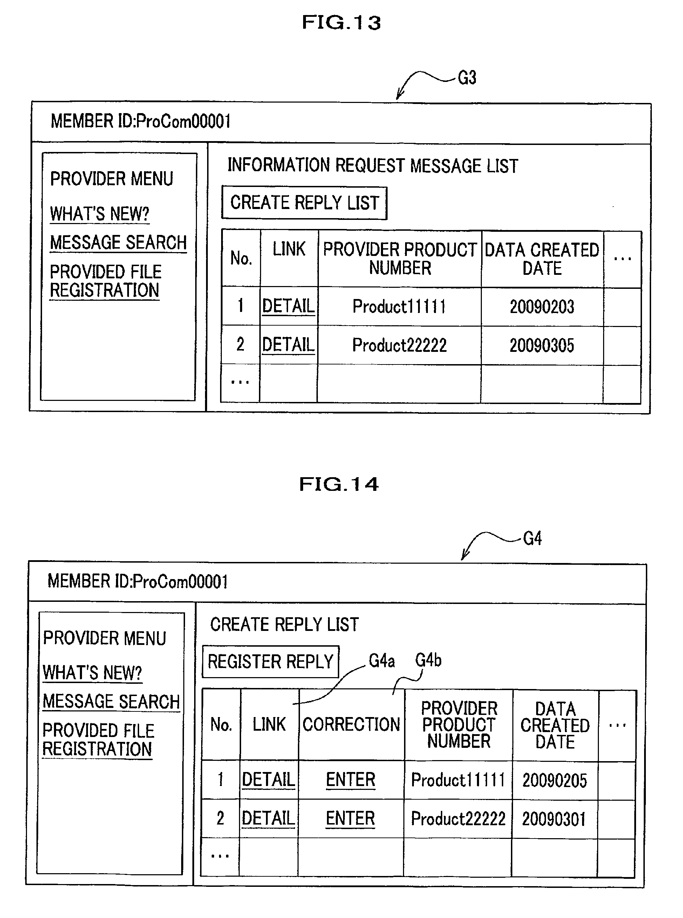

Conversely, when such a combination is present in the user authentication information 8 (see FIG. 2A) (step S504: AUTHENTICATION OK), in a step S505 in FIG. 12, the authentication function of the Web server 7 (see FIG. 1) confirms that the user authority 8d in the user authentication information 8 (see FIG. 2A) is "P" (provider's authority), calls out the menu display function of the Web server 7, and transmits the provider menu screen G1 (see FIG. 7) to the provider user-terminal 3.
In a step S507 in FIG. 12, as the information providing company selects "What's new" or "message search" in the provider menu screen G 1 through the provider user-terminal 3, the menu display function (see FIG. 1) calls out the message cross-checking function, and the message cross-checking function receives a message search request from the provider user-terminal 3. In a step S508 in FIG. 12, the message cross-checking function searches a message in the message exchange DB 5 (see FIG. 4), and transmits the information-request-message list screen G3 (see FIG. 13) matching the search condition to the provider user-terminal 3. FIG. 13 shows an example of the information-request-message list screen G3.

In a step S509 in FIG. 12, the information providing company selects a No., a link, or the like, enters a provider product number, etc., in the information-request-message list screen G3 (see FIG. 13) through the provider user-terminal 3, and presses a reply list creating button. This causes the Web server 7 to receive a reply list creating request from the provider user-terminal 3 (see FICz 1), and in a step S510 in FIG. 12, the reply data registration function (see FIG. 1) creates a reply list creating screen G4 (see FIG. 14) from information request messages selected by the provider user-terminal 3, and transmits such a screen to the provider user-terminal 3. FIG. 14 shows an example of the reply list creating screen G4 according to the embodiment.
The information providing company selects a link G4a, a correction G4b, or the like in the reply list creating screen G4 (see FIG. 14) through the provider user-terminal 3, and a reply registration button is pressed.

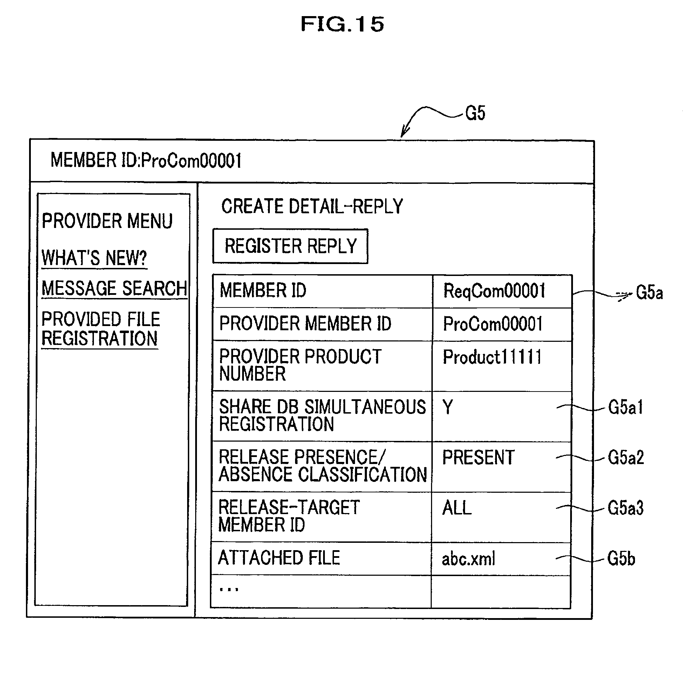

In a step S511 in FIG. 12, the reply data registration function receives a reply group detail creating request from the provider user-terminal 3, and in a step S512 in FIG. 12, creates a detail-reply creating screen G5 (see FIG. 15) from the information request messages, and transmits such a screen to the provider user-terminal 3. FIG. 15 shows an example of the detail-reply creating screen G5 according to the embodiment.
The information providing company enters data in a data G5a in the detail-reply creating screen G5 (see FIG. 15) through the provider user-terminal 3, and presses a reply registration button.

In a step S513 in FIG. 12, the reply data registration function (see FIG. 1) receives reply data input through the detail-reply creating screen G5 (see FIG. 15) and having undergone reply registration, and a reply file at the provider user-terminal 3 side, and in a step S514 in FIG. 12, creates a request-reply-message, registers such a message in the message exchange DB 5 (see FIG. 4). Such a message is set to be referable and acquirable to the requester user-terminal 2 (see FIG. 1).
The foregoing operation is the process (program module Se) that the inter-company information exchange/share system 1 registers a request reply from the provider user-terminal 3 of the information providing company.

### <Program Module Sf>

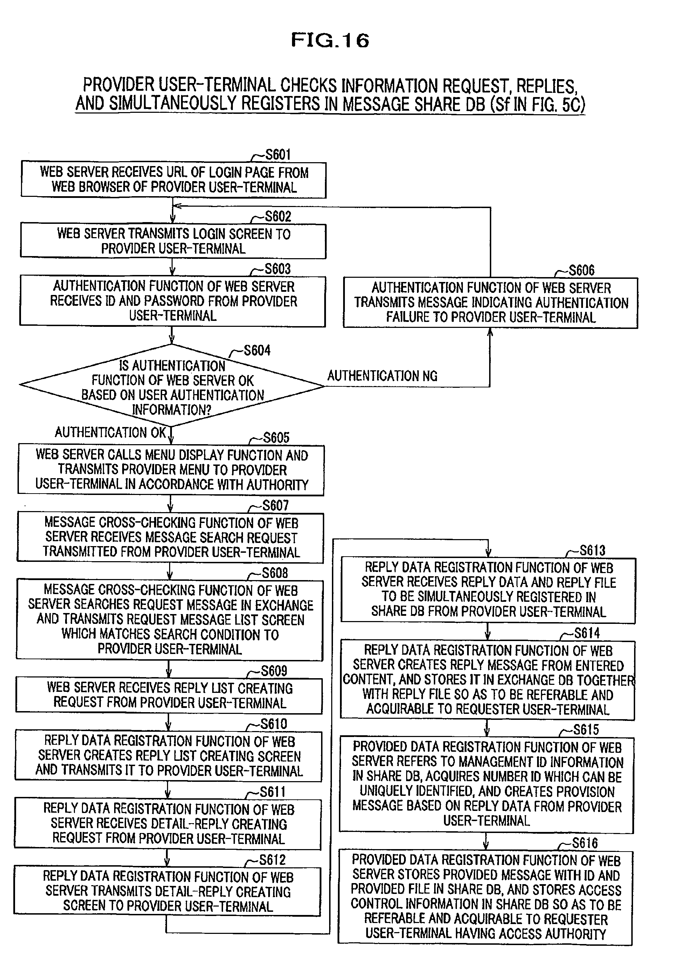

Next, an explanation will be given of the program module Sf shown in FIG. 5C that "the information providing company checks an information request, replies and simultaneously stores in the message share DB" with reference to FIGS. 16, 2, 3, 4, 7, and the like.
FIG. 16 is a flowchart showing a simultaneous operation of registering a request reply from the provider user-terminal 3 of the information providing company and of registering in the message share DB 6 in the inter-company information exchange/share system 1.
In a step S601 in FIG. 16, the Web server 7 receives the URL of the login page transmitted from the Web browser of the provider user-terminal 3, and in a step S602 in FIG. 16, transmits the login page to the provider user-terminal 3.

Next, in a step S603 in FIG. 16, the authentication function of the Web server 7 receives a login ID and a password both transmitted from the provider user-terminal 3, and in a step S604 in FIG. 16, checks whether or not a combination of the login ID and the password is present in the user authentication information 8 (see FIG. 2A).
When such a combination is not present in the user authentication information 8 (see FIG 2A) (step S604: AUTHENTICATION NG), in a step S606 in FIG. 16, the authentication function of the Web server 7 transmits a message to the effect that the authentication is failed to the provider user-terminal 3, and the process returns to the step S602 in FIG. 16.

Conversely, when such a combination is present in the user authentication information 8 (step S604: AUTHENTICATION OK), in a step S605 in FIG 16, the authentication function of the Web server 7 (see FIG. 1) confirms that the user authority 8d in the user authentication function 8 (see FIG. 2A) is "P" (provider's authority), calls out the menu display function of the Web server 7, and transmits the provider menu screen G1 (see FIG 7) to the provider user-terminal 3. In a step S607 in FIG. 16, when the information providing company selects "What's new" or "message search" in the provider menu screen G1 (see FIG. 7) through the provider user-terminal 3, the menu display function (see FIG. 1) calls out the message cross-checking function, and the message cross-checking function receives a message search request from the provider user-terminal 3. In a step S608 in FIG. 16, the message cross-checking function searches the message exchange DB 5 (see FIG. 4), and transmits the information-request-message list screen G3 (see FIG. 13) matching a search condition to the provider user-terminal 3.

In a step S609 in FIG. 16, the Web server 7 receives a reply list creating request from the provider user-terminal 3. In a step S610 in FIG. 16, the reply data registration function (see FIG. 1) creates the reply list creating screen G4 (see FIG. 14) from the information request message selected by the provider user-terminal 3, and transmits the screen to the provider user-terminal 3. In a step S611 in FIG. 16, as the reply data registration function receives a detail-reply creating request from the provider user-terminal 3, and, in a step S612 in FIG. 16, the reply data registration function creates the detail-reply creating screen G5 (see FIG. 15) based on the information request message, and transmits the screen to the provider user-terminal 3.

In a step S613 in FIG. 16, as the reply data registration function (see FIG. 1) receives reply data which is input from the detail-reply creating screen G5 (see FIG. 15) through the provider user-terminal 3 and which has undergone reply registration, the attached file G5b of a reply file, a simultaneous registration request into the message share DB 6 ("Y" in the sear DB simultaneous registration G5al), and access control information (release presence/absence classification G5a2, release-target member ID G5a3) specifying a release range. In a step S614 in FIG. 16, the reply data registration function creates a member ID identifying the provider user-terminal 3 and allocates the created ID in the member ID 5b (see FIG. 4) of a request-reply-message in the message exchange DB 5 (see FIG. 4), while at the same time, creates an ID identifying the requester user-terminal 2 and allocates the created ID in the customer member ID 5c (see FIG. 4), and registers the request-reply-message and the reply file (attached file 5g) with the message classification 5a (see FIG. 4) thereof being set as "Reply" indicating a reply to the information request. Accordingly, the request-reply-message and the reply file are set to be referable and acquirable to the requester user-terminal 2 (step S614).
Thereafter, in a step S615 in FIG. 16, the provided data registration function refers to the management ID information 10 (see FIG. 3A) in the message share DB 6, numbers a management ID which can be uniquely identified, and creates an information provision message from the reply from the requester user-terminal 2.

Thereafter, in a step S616 in FIG. 16, the provided-message information 11 to which the management ID is allocated, the provided file (attached file 11e), and the access control information 12 are stored in the message share DB 6 (see FIG. 3), so that those pieces of information are set to be referable and acquirable to the requester user-terminal 2 having an access authority.
The foregoing operation shown in FIG. 16 is the simultaneous process (program module Sf) of registering the request reply from the provider user-terminal 3 of the information providing company and of registering in the message share DB 6 in the inter-company information exchange/share system 1.

According to the above-explained method, the information requesting company takes into account the situation of the information providing company, and registers, in the message share DB 6, information acquired from the information providing company. Accordingly, the system 1 enables information exchange without exchanging an information request message and a request-reply-message between the information requesting company and the information providing company, resulting in making the distribution of information over the supply chains more efficient.

### «Summary»

The inter-company information exchange/share system 1 has not only the message exchange DB 5 which registers information on an exchanged message when information is exchanged, but also the message share DB 6 which registers information to be provided, an access level thereof, an access history, and the like.
An information requesting company which can access information registered in the message share DB 6 is set in the message share DB 6, and when information requested in an information request message from the information requesting company is already registered in the message share DB 6, the access control function of the system 1 checks whether or not an access thereto is allowed. If the access is allowed, the system 1 automatically transmits a request reply to the requester user-terminal 2 of the information requesting company instead of the information providing company without transmitting an information request message to the information providing company.

When the information is not registered in the message share DB 6 or when the access is not allowed because of the publication level of the information, the system 1 registers an information request message transmitted before in the message exchange DB 5 without causing the information requesting company to transmit the information request message again, and the system 1 requests the provider user-terminal 3 of the information providing company to provide information.
When the information providing company registers information through the provider user-terminal 3, the information providing company is allowed not only to register a request-reply-message to an information provision request from the information requesting company but also to register the information provision message in the message share DB 6 at the same time. When registration of the request-reply-message and registration of the information provision message are performed simultaneously, the system 1 has a function of simultaneously registering a piece of information in both message exchange DB 5 and message share DB 6.

In the foregoing explanation, a method through a command executing an exclusive program without any Web screen and a method of using a Web interface are applied to the requester user-terminal 2 of the information requesting company and to the provider user-terminal 3 of the information providing company, respectively. However, the requester user-terminal 2 of the information requesting company and the provider user-terminal 3 of the information providing company may employ both method through a Web interface and method through a command interface.

### <Working and Effect>

According to the embodiment, when information providing company provides a piece of information to a plurality of information requesting companies, as the information providing company registers information in the message share DB 6 beforehand prior to arriving of a request for information provision from the information requesting company, the message share DB 6 replies to information provision requests from the plurality of information requesting companies instead of the information providing company. Accordingly, the number of man-hour that the information providing company responds to the information requesting companies can be reduced. Moreover, as registration of a request reply and registration in the message share DB 6 are enabled at the same time when the information providing company receives an information request from the information requesting companies and replies to the requests, the number of man-hour for a registration process in the message share DB 6 can be reduced.

When an information requesting company requests information provision, a process of checking whether or not the information providing company has registered information in the message share DB 6 and of replying to the information requesting company instead of the information providing company if the information is registered and a process of requesting the information providing company to provide information if the information is not registered are executed in conjunction with each other. Accordingly, the information requesting company does not need to confirm whether or not the information is registered in the message share DB 6, and does not need to transmit an information request message to the information providing company if the information is not registered, thereby reducing an amount of information transmitted over the network.

Because the system enables a plurality of companies to exchange and share information among them, it is possible to reduce the number of man-hour for development of an individual system per information requesting company and information providing company, and also to reduce the cost thereof.
As explained above, according to the embodiment, information is exchanged among a plurality of companies via the Internet, and all of or a part of information distributed is registered in the message share DB 6, thereby making inter-company information exchange more efficient.

In the foregoing embodiment, the explanation has been given of an example case in which the message exchange DB 5 and the message share DB 6 are separately configured, but those DBs may be configured as a single DB. Moreover, in the foregoing embodiment, although the explanation has been given of an example case in which the G/W server 4 and the Web server 7 are separate server devices, those may be configured by a common server device. Furthermore, a server may include both message exchange DB 5 and message share DB 6.

In the foregoing embodiment, the explanation has been given of an example case in which various functions of the G/W server 4, such as the authentication function, the message receiving function, the access control function, the automatic reply function, the provision request function, and the message transmission/reply function, and various functions of the Web server 7, such as the authentication function, the menu display function, the provided data receiving function, the provided data registration function, the reply data registration function, the access control function, and the message cross-checking function, are separately configured one by one. However, those functions may be combined together as needed.

In the foregoing embodiment, the message exchange DB 5 is exemplified as an example of a message exchanging/storing unit, and the message share DB 6 is exemplified as an example of a message sharing/storing unit. However, it is needless to say that any storage/memory device other than a DB can be used if it can register information registered in the message exchange DB 5 and information registered in the message share DB 6 and can realize predetermined functions.
For example, a part of or all of the message exchanging/storing unit may be configured by a work area which temporarily stores information.

## Claims

1. An information exchange/share system which exchanges, via communication means, information between a terminal of an information provider which provides the information to be distributed and a terminal of an information requester which requests an access to the distributed information, the system comprising:
a message sharing/storing unit which stores the information provided from the terminal of the information provider, and accessibility information for setting an information requester which is allowed to access the information;
an access control function which checks whether or not information requested in an information request message from the terminal of the information requester is present in the message sharing/storing unit, and also determines, based on the accessibility information, whether or not an information requester which requests the information requested in the information request message is allowed to access to the information; and
an automatic reply function which creates request-reply-message information to the information requester based on the information in the message sharing/storing unit without transmitting the information request message to the terminal of the information provider when it is determined that the information requested in the information request message from the information requester is already stored in the message sharing/storing unit and that the information requester is allowed to access the information.

2. The information exchange/share system according to claim 1, wherein
the automatic reply function registers the created request-reply-message information in a message exchanging/storing unit, and
the information exchange/share system further comprises a message transmission/reply function of transmitting the request-reply-message information to the terminal of the information requester.

3. The information exchange/share system according to claim 2, further comprising an authentication function which determines whether or not an information request message from the information requester is authenticated,
wherein the access control function checks whether or not the authenticated information request message is present in the message sharing/storing unit, and determines, based on the accessibility information, whether or not the information requester which requests information requested in the authenticated information request message is allowed to access the information.

4. An information exchange/share system which exchanges, via a communication means, information between a terminal of an information provider which provides the information to be distributed and a terminal of an information requester which requests an access to the distributed information, the system comprising:
a message sharing/storing unit which stores the information provided from the terminal of the information provider, and accessibility information for setting an information requester which is allowed to access the information;
an access control function which determines whether or not information requested in an information request message is present in the message sharing/storing unit, and determines, based on the accessibility information, whether or not an information requester which requests the information requested in the information request message from the information requester is allowed to access the information; and
a provision requesting function which creates information-provision request information to the information provider when it is determined that the information requested in the information request message from the terminal of the information requester is already stored in the message sharing/storing unit and that the information requester is not allowed to access the information based on the accessibility information or the information requested in the information request message is not stored in the message sharing/storing unit.

5. The information exchange/share system according to claim 4, wherein the provision requesting function registers the created information-provision request information in a message exchanging/storing unit.

6. The information exchange/share system according to claim 5, further comprising an authentication function which determines whether or not an information request message from the information requester is authenticated,
wherein the access control function checks whether or not the authenticated information request message is present in the message sharing/storing unit, and determines, based on the accessibility information, whether or not the information requester which requests information requested in the authenticated information request message is allowed to access the information.

7. The information exchange/share system according to claim 6, further comprising a reply data registration function of registering request-reply-message information from the terminal of the information provider in the message exchanging/storing unit,
wherein the system preferably further comprises a provided data registration function of registering request-reply-message information from the terminal of the information provider in the message exchanging/storing unit, and
wherein the system more preferably further comprises a message transmission/reply function of transmitting the request-reply-message information to the terminal of the information requester.

8. A method for an information exchange/share system which exchanges, via a communication means, information between a terminal of an information provider which provides the information to be distributed and a terminal of an information requester which requests an access to the distributed information, and which includes a message sharing/storing unit which stores the information provided from the terminal of the information provider, and accessibility information for setting an information requester which is allowed to access the information, the method comprising:
an access control step of checking whether or not information requested in an information request message from the terminal of the information requester is present in the message sharing/storing unit, and of determining, based on the accessibility information, whether or not an information requester which requests the information requested in the information request message is allowed to access to the information; and
an automatic reply step of creating request-reply-message information to the information requester based on the information in the message sharing/storing unit without transmitting the information request message to the terminal of the information provider when it is determined that the information requested in the information request message from the information requester is already stored in the message sharing/storing unit and that the information requester is allowed to access the information.

9. The method according to claim 8, wherein
in the automatic reply step, the created request-reply-message information is registered in a message exchanging/storing unit, and
the method further comprises a message transmission/reply step of transmitting the request-reply-message information to the terminal of the information requester.

10. The method according to claim 9, further comprising an authentication step of determining whether or not an information request message from the information requester is authenticated,
wherein in the access control step, it is checked whether or not the authenticated information request message is present in the message sharing/storing unit, and is determined, based on the accessibility information, whether or not the information requester which requests information requested in the authenticated information request message is allowed to access the information.

11. A method for an information exchange/share system which exchanges, via communication means, information between a terminal of an information provider which provides the information to be distributed and a terminal of an information requester which requests an access to the distributed information, and which includes a message sharing/storing unit which stores the information provided from the terminal of the information provider, and accessibility information for setting an information requester which is allowed to access the information, the method comprising:
an access control step of determining whether or not information requested in an information request message is present in the message sharing/storing unit, and of determining, based on the accessibility information, whether or not an information requester which requests the information requested in the information request message from the information requester is allowed to access the information; and
a provision requesting step of creating information-provision request information to the information provider when it is determined that the information requested in the information request message from the terminal of the information requester is already stored in the message sharing/storing unit and that the information requester is not allowed to access the information based on the accessibility information or the information requested in the information request message is not stored in the message sharing/storing unit.

12. The method according to claim 11, wherein in the provision requesting step, the created information-provision request information is registered in a message exchanging/storing unit.

13. The method according to claim 12, further comprising an authentication step of determining whether or not an information request message from the information requester is authenticated,
wherein in the access control step, it is checked whether or not the authenticated information request message is present in the message sharing/storing unit, and is determined, based on the accessibility information, whether or not the information requester which requests information requested in the authenticated information request message is allowed to access the information.

14. The method according to claim 13, further comprising a reply data registration step of registering request-reply-message information from the terminal of the information provider in the message exchanging/storing unit,
wherein the method preferably further comprises a provided data registration step of registering request-reply-message information from the terminal of the information provider in the message exchanging/storing unit, and
wherein the method more preferably further comprises a message transmission/reply step of transmitting the request-reply-message information to the terminal of the information requester.
